# FASCICULE DE BREVET EUROPEEN

(11) **EP 3 292 268 B1**
(45) Date de publication et mention de la délivrance du brevet: **24.07.2019**
(21) Numéro de dépôt: 16719067.7
(22) Date de dépôt: 26.04.2016
(51) Int. Cl.: E21B 41/00, B65G 5/00, E21B 47/10

(54) **INSTALLATION POUR LA SURVEILLANCE DE SITES DE STOCKAGE GEOLOGIQUE DE GAZ**
EINRICHTUNG ZUR ÜBERWACHUNG VON GEOLOGISCHEN GASLAGERSTÄTTEN
FACILITY FOR MONITORING GEOLOGICAL GAS STORAGE SITES

(30) Priorité: 05.05.2015 FR 1553999
(43) Date de publication de la demande: 14.03.2018
(73) Titulaire: IFP Energies nouvelles, 92500 Rueil-Malmaison (FR)
(72) Inventeur: GARCIA, Bruno, 92500 Rueil Malmaison (FR); ROUCHON, Virgile, 92210 Saint-Cloud (FR); CEREPI, Adrian, 33600 Pessac (FR); LOISY, Corinne, 33400 Talence (FR); LE ROUX, Olivier, 33600 Pessac (FR); RILLARD, Jean, 75019 Paris (FR); BERTRAND, Claude, 87240 Ambazac (FR); WILLEQUET, Olivier, 59110 La Madeleine (FR)
(74) Mandataire: IFP Energies nouvelles
(86) Numéro de dépôt international: PCT/EP2016/059316
(87) Numéro de publication internationale: WO 2016/177606

(56) Documents cités:
- FR-A1- 2 984 510
- C. SCHÜTZE ET AL: "Diagnostic monitoring to identify preferential near-surface structures for CO2 degassing into the atmosphere: Tools for investigations at different spatial scales validated at a natural analogue site", INTERNATIONAL JOURNAL OF GREENHOUSE GAS CONTROL, vol. 18, 29 août 2013 (2013-08-29), pages 285-295, XP055252669, GB ISSN: 1750-5836, DOI: 10.1016/j.ijggc.2013.07.006
- C Schmidt-Hattenberger ET AL: "CO2 remove - Final project report Chapter 8 - Ketzin test site", , 30 juin 2012 (2012-06-30), XP055252670, Extrait de l'Internet: URL:http://www.google.com/url?sa=t&rct=j&q =&esrc=s&frm=1&source=web&cd=2&ved=0ahUKEw juqYWB3Y7LAhXE_Q4KHUxbDs4QFgghMAE&url=http %3A%2F%2Fwww.co2remove.eu%2FFileDownload.a spx%3FIdFile%3D927%26From%3DPublications&u sg=AFQjCNEKiM6mZlkEpF4DIRd98Uzh8WYLCg&bvm= bv.114733917,d.bGs [extrait le 2016-02-23]
- Li-Cor: "LI-8100A Automated Soil CO 2 Flux System Survey, Long-Term, and Multiplexed Measurements", , 31 décembre 2012 (2012-12-31), XP055252680, Extrait de l'Internet: URL:https://www.licor.com/env/pdf/soil_flu x/8100A_brochure.pdf [extrait le 2016-02-24]
- C. Sch?tze ET AL: "Diagnostic monitoring to identify preferential near-surface structures for CO2 degassing into the atmosphere: Tools for investigations at different spatial scales validated at a natural analogue site", International Journal of Greenhouse Gas Control, vol. 18, 29 August 2013 (2013-08-29), pages 285-295, XP055252669, AMSTERDAM, NL ISSN: 1750-5836, DOI: 10.1016/j.ijggc.2013.07.006
- C Schmidt-Hattenberger ET AL: "CO2 remove - Final project report Chapter 8 - Ketzin test site", , 30 June 2012 (2012-06-30), XP055252670, Retrieved from the Internet: URL:http://www.google.com/url?sa=t&rct=j&q =&esrc=s&frm=1&source=web&cd=2&ved=0ahUKEw juqYWB3Y7LAhXE_Q4KHUxbDs4QFgghMAE&url=http %3A%2F%2Fwww.co2remove.eu%2FFileDownload.a spx%3FIdFile%3D927%26From%3DPublications&u sg=AFQjCNEKiM6mZlkEpF4DIRd98Uzh8WYLCg&bvm= bv.114733917,d.bGs [retrieved on 2016-02-23]
- Li-Cor: "LI-8100A Automated Soil CO 2 Flux System Survey, Long-Term, and Multiplexed Measurements", , 31 December 2012 (2012-12-31), XP055252680, Retrieved from the Internet: URL:https://www.licor.com/env/pdf/soil_flu x/8100A_brochure.pdf [retrieved on 2016-02-24]
- D.G. Jones ET AL: "Monitoring of near surface gas seepage from a shallow injection experiment at the CO 2 Field Lab, Norway", International Journal of Greenhouse Gas Control, vol. 28, 1 September 2014 (2014-09-01), pages 300-317, XP055561380, AMSTERDAM, NL ISSN: 1750-5836, DOI: 10.1016/j.ijggc.2014.06.021
- Robert Heinse ET AL: "Vadose Zone Processes: A Compendium for Teaching Interdisciplinary Modeling", Journal of Contemporary Water Research & Education, 1 December 2013 (2013-12-01), pages 22-31, XP055561385, Carbondale DOI: 10.1111/j.1936-704X.2013.03163.x Retrieved from the Internet: URL:hptt
- Céline Marier: "RÉSEAU ENVIRONNEMENT SALUE L'ADOPTION DU RÈGLEMENT SUR LE PRÉLÈVEMENT DES EAUX ET LEUR PROTECTION", Vecteur Environnement, 1 November 2014 (2014-11-01), page 8, XP055561393, Montréal Retrieved from the Internet: URL:http://www.collectif-scientifique-gaz- de-schiste.com/accueil/images/pdf/presenta tions/CelineMarier.pdf [retrieved on 2019-02-25]

## Description

La présente invention concerne le domaine de l'exploration et de l'exploitation de gisements pétroliers, ou de sites géologiques de stockage géologique de gaz, tel que le dioxyde de carbone (CO₂) ou le méthane. Plus particulièrement, la présente invention peut concerner la surveillance de sites de stockage géologique de gaz.

Le volume du gaz injecté dans une formation géologique souterraine est facilement connu par la mesure du débit de gaz en tête de puits d'injection. Toutefois, le devenir du gaz une fois injecté est beaucoup plus difficile à maîtriser : ce gaz peut migrer verticalement hors de la formation de stockage (dans des couches géologiques plus superficielles, voire jusqu'à la surface) ou latéralement dans la formation hôte dans des zones non prédites initialement.

Dans le cas du stockage géologique de CO₂, la directive européenne 2009/31/CE exige un stockage permanent et sûr pour l'environnement, prévenant et maîtrisant les remontées de CO₂ et de substances annexes vers la surface, tout en limitant les perturbations du milieu souterrain. Ainsi, un taux de fuite de CO₂ de 0,01% / an au droit d'un site de séquestration géologique de CO₂ est au maximum toléré selon cette directive.

Afin d'être conforme aux réglementations en vigueur, et aussi pour contribuer à l'acceptation sociétale de cette technologie, il apparait nécessaire de mettre en place des outils et systèmes de surveillance des sites de stockage géologique de gaz pour détecter d'éventuelles fuites, évaluer leur importance, et alerter qui de droit. Ces outils de « monitoring » (« surveillance » en français) doivent être peu coûteux, d'une grande fiabilité, exploités avec une implication humaine minimale, et adaptés pour rester installés sur de longues durées.

Pour suivre l'évolution de fluides injectés au sein d'un milieu poreux, de nombreuses techniques ont été développées par les industriels.

Parmi ces techniques, la sismique répétitive, dite sismique 4D, est utilisée dans l'industrie (pétrolière ou environnementale). Une telle technique consiste à réaliser différentes campagnes sismiques, à des moments différents (en général les campagnes sont espacées d'au moins une année, mais des dispositifs d'acquisitions permanents existent). Ainsi, le spécialiste peut suivre l'évolution des mouvements et des pressions des fluides du site de stockage géologique. Cette technique a été exploitée dans le domaine environnemental pour estimer, à partir des données sismiques, le volume total et la masse totale de gaz en place dans le sous-sol. Cependant, cette méthode, assez longue de mise en oeuvre et souffrant d'une forte indétermination à faible profondeur, n'est pas adaptée pour une détection de fuites de gaz en proche surface et en temps réel. De plus, cette technique se limite à la détection de la phase libre, c'est-à-dire du gaz, et non à la phase dissoute.

L'objet du brevet EP 12290058 concerne un procédé de stockage de gaz, tel que le dioxyde de carbone (CO₂) ou le méthane, comportant une phase de surveillance du devenir du gaz, permettant de quantifier la masse de gaz dissoute, éventuellement la quantité de gaz précipitée, et permettant d'anticiper une fuite de ce gaz au droit du site de stockage. Le procédé se base sur l'ajustement d'un modèle décrivant l'évolution de la concentration en gaz en fonction du temps, au moyen d'analyses géochimiques in situ de gaz rares contenus dans des phases fluides d'échantillons du sous-sol.

On connaît également le brevet FR 2984510, qui concerne une installation pour l'analyse et la détermination des flux de CO₂ permettant notamment de discriminer le flux de CO₂ d'origine profonde du CO₂ biologique naturel, généré proche de la surface. Cette installation est caractérisée par une station de surface météorologique équipée d'une chambre de collecte des gaz de surface, de trois moyens de prélèvement à trois profondeurs différentes dans le sol, de moyens de mesure de la concentration en CO₂, N₂, et O₂ audites trois profondeurs, de moyens de mesure de la concentration en CO₂ contenu dans le gaz recueilli dans la chambre de collecte. Cette installation présente l'avantage de prendre en compte une ligne de base (ou « base line » en anglais) représentative de l'émissivité naturelle de CO₂.

Le document «STRAZISAR, BR., WELLS, AW., DIEHL, JR., 2009. Near surface monitoring for the ZERT shallow CO2 injection project. Int J Greennehouse Gas Control 3(6):736-744*.* » démontre quant à lui qu'une fuite de CO₂ peut provoquer une diminution locale de la résistivité électrique au droit de la fuite provoquée de CO₂. Cette diminution est interprétée comme étant liée à une diminution de la résistivité électrique de l'eau interstitielle, engendrée par la dissolution du CO₂ dans cette eau interstitielle

On connait également le document «Schütze, C., Dietrich, P., Sauer, U., ,2013. Diagnostic monitoring to identify preferential near-surface structures for CO2 degassing into the atmosphere: tools for investigations at différent spatial scales validated at a natural analogue sitelnt. J. Greenh. Gas Control 18 , 285 - 295", qui concerne la surveillance de fuites de CO₂ dans l'atmosphère.

Ainsi, les procédés, dispositifs et installations selon l'art antérieur sont limités à un seul type de mesures (sismique, géochimique, ou électrique) pour la détection de fuites de gaz. De plus, aucun de ces documents ne décrit ni de moyens permettant l'automatisation de ces mesures, ni de moyens permettant une surveillance à long terme, et à distance, d'un site de stockage géologique de gaz.

La présente invention décrit quant à elle une installation pour la surveillance de sites de stockage géologique de gaz combinant, de façon totalement intégrée, deux types de mesures, précisément des mesures géochimiques et électriques. De plus, l'installation selon l'invention est entièrement automatisée et comprend un système de transmission des informations collectées par ladite installation. L'installation selon l'invention peut ainsi permettre une surveillance en continue et éventuellement à distance de sites de stockage géologique de gaz.

### L'installation selon l'invention

De façon générale, l'objet de l'invention concerne une installation pour la surveillance d'un site de stockage géologique d'un gaz, tel que du CO₂ ou du méthane. L'installation comporte en combinaison au moins les éléments suivants :
- un dispositif de mesures géochimiques, comportant une pluralité de sondes de prélèvement de gaz, lesdites sondes étant reliées à un analyseur de gaz, lesdites sondes étant placées dans les tous premiers mètres sous la surface du sol dudit site ;
- un dispositif de mesures électriques, comportant une pluralité d'électrodes, lesdites électrodes étant reliées à un résistivimètre, ledit dispositif de mesures électriques étant destiné à des mesures électriques dans le sous-sol ;
- une station météorologique de surface permettant la mesure de paramètres environnementaux associés audit site,
lesdits dispositifs de mesures géochimiques et électriques étant pilotés par un automate, ledit dispositif de mesures géochimiques, ledit dispositif de mesures électriques et la dite station météorologique étant reliés à un collecteur de données, ledit collecteur étant lui-même relié à des moyens de transmission desdites données, lesdites sondes de prélèvement de gaz étant installées au-dessus de la zone vadose et en-dessous de la zone de production de gaz biogénique.

Selon un mode de réalisation de l'invention, lesdites sondes de prélèvements de gaz sont reliées à un analyseur de gaz via des moyens de transferts de gaz.

Selon un mode de réalisation de l'invention, lesdits moyens de transferts de gaz dudit dispositif de mesures géochimiques peuvent comporter une électrovanne à trois voies, une première voie étant reliée à une desdites sondes de prélèvement de gaz, une deuxième voie conduisant à un système de purge dudit dispositif de mesures géochimiques, et une troisième voie étant reliée à une pompe, ladite pompe étant destinée à aspirer ledit gaz prélevé par lesdites sondes de prélèvement et permettant la distribution dudit gaz prélevé vers ledit analyseur de gaz.

Selon un mode de réalisation de l'invention, ledit analyseur de gaz peut comporter au moins un détecteur dudit gaz stocké et au moins un détecteur de gaz rare.

Selon un mode de réalisation de l'invention, ledit résistivimètre dudit dispositif de mesures électriques peut envoyer un courant électrique continu dans le sous-sol via deux desdites électrodes et peut enregistrer une différence de potentiel électrique entre deux autres desdites électrodes.

Selon un mode de réalisation de l'invention, l'automate peut déclencher des mesures électriques via le dispositif de mesures électriques et des mesures géochimiques via le dispositif de mesures géochimiques de façon régulière dans le temps.

Selon un mode de réalisation de l'invention, lesdites électrodes peuvent être placées à la surface du sol, et/ou le long de parois d'une cavité souterraine, et/ou le long d'un puits.

Selon un mode de réalisation de l'invention, ladite station météorologique peut assurer un contrôle continu d'au moins la température, la pression, la pluviométrie et l'hygrométrie.

Selon un mode de réalisation de l'invention, l'alimentation électrique de ladite installation peut être assurée par un panneau solaire, connectée à une batterie.

Selon un mode de réalisation de l'invention, lesdits moyens de transmission desdites données peuvent être assurés par un modem 3G.

En outre, l'invention concerne une utilisation de l'installation selon l'invention pour la surveillance d'un site de stockage géologique d'un gaz, tel que du CO₂ ou du méthane.

Selon un mode de réalisation de l'utilisation de l'installation selon l'invention, une étape d'étalonnage est réalisée préalablement à l'injection de gaz dans le site de stockage géologique d'un gaz.

D'autres caractéristiques et avantages du procédé selon l'invention, apparaîtront à la lecture de la description ci-après d'exemples non limitatifs de réalisations, en se référant aux Figures annexées et décrites ci-après.

### Présentation succincte des figures

- la Figure 1 présente un schéma illustratif de l'injection d'un gaz dans un site de stockage géologique de gaz.
- la Figure 2 présente un exemple de réalisation non limitatif de l'installation selon l'invention.
- la Figure 3 présente un plan surfacique d'un site de stockage géologique de CO₂, ainsi que la localisation des différents éléments constituant un mode de réalisation de l'installation selon l'invention.
- la Figure 4 présente des résultats de tomographie de résistivité électrique obtenus avant injection de CO₂ et à partir de l'exemple de mise en oeuvre de l'installation selon l'invention présenté en Figure 3.
- la Figure 5 présente les variations de concentrations en CO₂ en fonction des variations relatives de résistivité électrique obtenues après injection de CO₂ et à partir de l'exemple de mise en oeuvre de l'installation selon l'invention présenté en Figure 3.
- La Figure 6 présente l'évolution au cours du temps de la variation relative de résistivité électrique obtenue après injection de CO₂ et à partir de l'exemple de mise en oeuvre de l'installation selon l'invention présenté en Figure 3.

### Description détaillée de l'installation

L'un des objets de l'invention concerne une installation pour la surveillance de sites de stockage géologique de gaz, tel que le dioxyde de carbone (CO₂) ou le méthane, permettant la détection de fuites de ce gaz, de façon quantitative, intégrée, permanente et sans intervention humaine.

Le stockage géologique de gaz, comporte une phase d'injection dudit gaz dans une formation du sous-sol, et une phase de surveillance du devenir de l'espèce à stocker dans le sous-sol. Le gaz injecté contient essentiellement une espèce à stocker (dioxyde de carbone (CO₂), méthane...), mais bien souvent, au moins un gaz rare (du type hélium, argon...) est également présent, co-injecté simultanément avec l'espèce à stocker.

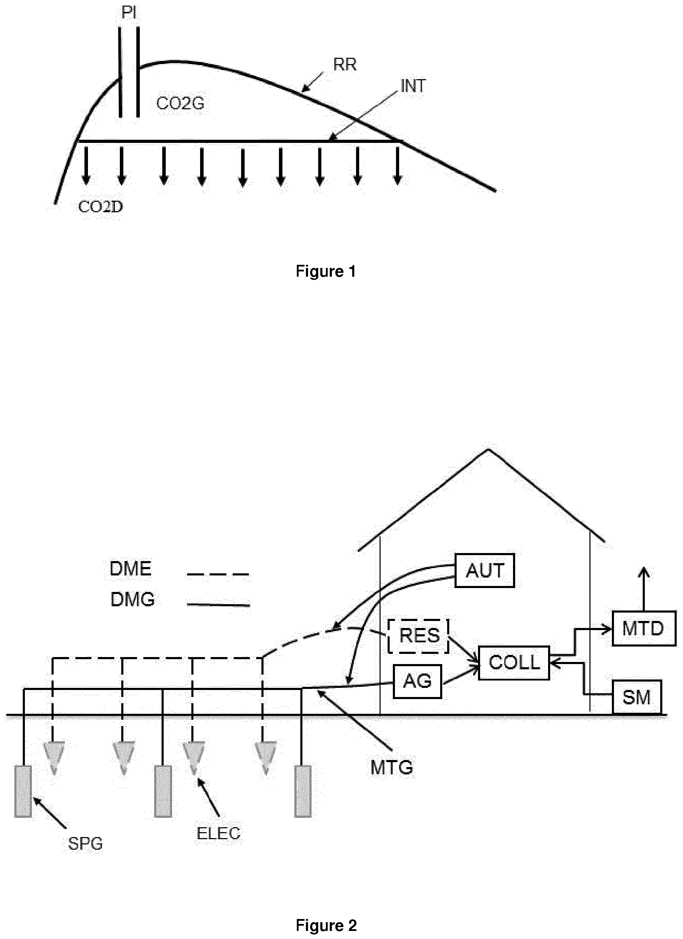

La Figure 1 présente un exemple d'injection d'un gaz, via un puits injecteur (PI), dans une roche réservoir (RR) d'une formation du sous-sol, le gaz contenant essentiellement l'espèce à stocker, du CO₂, et la roche réservoir contenant un fluide, notamment de l'eau.

Lorsque le CO₂ est injecté, il migre dans la formation dans un premier temps principalement sous forme gazeuse (CO₂G) par gravité et/ou due à un gradient de pression existant, jusqu'à s'immobiliser pour les raisons suivantes : disparition de gradient de pression par écoulement, rétention du gaz résiduelle par capillarité, rétention du gaz de manière structurale. Une fois la phase gaz stabilisée dans les pores, le panache de CO₂ a in fine une grande surface horizontale par rapport à son épaisseur.

Le second phénomène de migration qui prend le relais est la diffusion avec ou non une instabilité gravitaire. Ce type de migration prend sa source à l'interface gaz/eau (INT), par conséquent en-dessous du panache de CO₂ gaz (CO₂G) dans la roche réservoir, mais également au-dessus du panache de CO₂ à travers la roche couverture. Sous cette interface, on trouve donc du CO₂ sous forme dissoute dans de l'eau (CO₂D), et transporté par diffusion vers le bas (flèches sur la Figure 1).

La Figure 2 présente un exemple de réalisation non limitatif de l'installation selon l'invention, les différents éléments de l'installation selon l'invention pouvant être agencés de façon différente.

L'installation selon l'invention comporte un dispositif de mesures géochimiques DMG. Le dispositif de mesures géochimiques DMG comprend une pluralité de sondes de prélèvement de gaz SPG, les sondes étant reliées à un analyseur de gaz AG. De façon préférée, les sondes de prélèvement de gaz SPG sont reliées via des moyens de transfert de gaz MTG à l'analyseur de gaz AG. Les sondes de prélèvement de gaz SPG sont placées en proche surface, c'est-à-dire dans les tous premiers mètres sous la surface d'un site. Le dispositif de mesures géochimiques de gaz DMG selon l'invention permet un prélèvement de gaz présent localement, c'est-à-dire à proximité de l'emplacement des sondes de prélèvement SPG. L'analyseur de gaz AG permet la détection et la quantification (estimation de la concentration par exemple) d'au moins un type de gaz. Préférentiellement, l'analyseur de gaz permet la détection et la quantification du gaz injecté dans le site de stockage géologique.

L'installation selon l'invention comporte également un dispositif de mesures électriques DME, ce dispositif étant destiné à des mesures électriques dans le sous-sol. Ce dispositif comprend une pluralité d'électrodes ELEC reliées à un résistivimètre RES. Les électrodes du dispositif de mesures électriques DME peuvent être installées toutes ou en partie à la surface du sol, le long de parois d'une cavité souterraine ou bien le long de puits de forage. Le résistivimètre RES du dispositif de mesures électriques DME comporte un générateur de courant électrique continu (par exemple entre 5 et 200 mA) et un voltmètre permettant de mesurer une différence de potentiel électrique. Selon un mode de réalisation de la présente invention illustré en Figure 2, lesdites électrodes ELEC sont au moins au nombre de quatre, le résistivimètre RES envoie ledit courant électrique dans le sous-sol via au moins deux desdites électrodes ELEC et mesure ladite différence de potentiel électrique, induite dans le sous-sol par le courant injecté, via au moins deux autres desdites électrodes ELEC.

En outre, l'installation comporte une station météorologique SM de surface, permettant d'accéder à des paramètres environnementaux (tels que la température, la pression, la pluviométrie, vitesse du vent, etc) associés au site.

Par ailleurs, les dispositifs de mesures géochimiques DMG et électriques DME sont pilotés par un automate AUT. Cet automate AUT permet ainsi de préprogrammer les mesures à réaliser, qu'elles soient de type électrique ou géochimique. L'automate AUT peut par exemple permettre de définir un séquençage des mesures géochimiques, en déclenchant, successivement dans le temps, selon une périodicité donnée, le prélèvement de gaz sonde après sonde, ainsi que le transfert et l'analyse de ce gaz. De même, l'automate AUT peut permettre de déclencher des mesures électriques avec une certaine périodicité, selon certains paramètres (nombre d'électrodes impliquées dans la mesure, courant électrique injecté, etc).

En outre, le dispositif de mesures géochimiques DMG, le dispositif de mesures électriques DME et la station météorologique SM sont reliés à un collecteur de données COLL. Le collecteur de données COLL permet de récolter, centraliser et stocker l'ensemble des mesures réalisées par l'installation selon l'invention.

De plus, ledit collecteur COLL est lui-même relié à des moyens de transmission desdites données MTD. Les moyens de transmission desdites données MTD permettent un transfert des informations collectées par le collecteur COLL.

L'installation selon l'invention peut être placée à l'aplomb du site de stockage géologique de gaz. Avantageusement, les sondes de prélèvements SPG du dispositif de mesures géochimiques DMG et les électrodes ELEC du dispositif de mesures électriques DME sont réparties en fonction de résultats de modélisations prévisionnelles de l'évolution (évolution en taille, mais aussi déplacement latéral et vertical) du panache de gaz. De telles modélisations prévisionnelles peuvent être réalisées à l'aide d'un simulateur numérique d'écoulement en milieu poreux.

Ainsi, l'installation selon l'invention permet, entre autres, de prélever, de manière automatique et préprogrammée via l'automate AUT, des échantillons de gaz via des sondes SPG, et d'analyser le gaz prélevé. Lorsque les sondes sont placées en surface ou en proche surface du site de stockage géologique de gaz, l'installation selon l'invention permet de détecter l'arrivée de gaz à la (proche) surface d'un site de stockage géologique, de qualifier et quantifier ce gaz. En opérant de telles mesures géochimiques de façon répétée dans le temps via l'automate AUT, le dispositif de mesures géochimiques DMG permet la surveillance dans le temps d'éventuelles fuites de CO₂ arrivant en (proche) surface.

En outre, l'installation selon l'invention permet de réaliser des mesures électriques, de façon automatique et préprogrammée, via l'automate AUT. De façon générale, les mesures électriques fournissent, de manière non invasive, une cartographie de la réponse électrique du sous-sol au-dessus duquel est disposé un dispositif électrique. La profondeur d'investigation des méthodes électriques varie de la dizaine à la centaine de mètres, en fonction des paramètres des dispositifs de mesures électriques mis en oeuvre. En opérant de telles mesures électriques de façon répétée dans le temps via l'automate AUT, le dispositif de mesures électriques permet de déceler les changements de propriétés électriques dans le sous-sol investigué. En combinant ces changements avec d'autres types d'informations, ces changements peuvent être interprétés par le spécialiste comme dus ou non dus à une fuite du gaz stocké dans le site de stockage géologique de gaz.

Selon l'invention, la station météorologique peut permettre d'assurer un contrôle continu dans le temps de paramètres environnementaux (par exemple température, vitesse et direction du vent, hygrométrie, pression, indice d'ensoleillement, pluviométrie). Ces paramètres permettent la prise en compte des événements climatiques survenus à la surface d'un site de stockage géologique de gaz lors de l'interprétation des mesures des dispositifs de mesures électriques et géochimiques. Par exemple, grâce à ces mesures, le spécialiste peut prendre en compte la mesure de la pluviométrie pour corriger les mesures des propriétés électriques du sous-sol d'une hausse ou d'un déficit de la quantité d'eau dans le sous-sol proche. De même, une augmentation d'eau dans le sous-sol proche va avoir un impact sur la concentration en gaz prélevés en (proche) surface, impact que le spécialiste est à même de quantifier. De façon générale, les mesures en continu de paramètres environnementaux réalisées par la station météorologique selon l'invention peuvent permettre au spécialiste d'établir une ligne de base (« baseline » en anglais) représentative des effets climatiques sur les mesures géochimiques et les mesures électriques. En cas de fuite de gaz, les effets dus à cette fuite sur les mesures électriques et sur les mesures géochimiques vont venir s'additionner à la ligne de base représentative des effets climatiques sur les mesures géochimiques et sur les mesures électriques.

Selon un mode de réalisation de la présente invention, ladite station météorologique assure un contrôle continu d'au moins la température, la pression, l'hygrométrie et la pluviométrie.

Selon l'invention, le collecteur de données COLL permet de recueillir l'ensemble des données mesurées automatiquement et périodiquement par le dispositif de mesures géochimiques DMG, le dispositif de mesures électriques DME et la station météorologique SM. Ces données sont alors transmises en temps réel par un système de transmission de données MTD.

Ainsi, l'installation selon l'invention permet, entre autres, le couplage de dispositifs de mesure de type différent (électrique, géochimique et météorologique) en une seule et unique installation cohérente. De plus, l'installation selon l'invention est entièrement automatisée, ce qui comprend l'automatisation des mesures mais aussi la transmission des informations collectées. Cette automatisation d'un tel système couplé permet une synchronisation des mesures de type différent, ce qui n'est pas réalisable pour un système non intégré ou un système non automatisé. De façon générale, une telle installation permet une détection fiabilisée de fuites de gaz pouvant survenir à la suite d'une injection de gaz dans un site de stockage géologique de gaz. La fiabilité de la détection est assurée par le fait que les différents types d'informations (électrique, géochimique et météorologique) peuvent être collectées de façon concertée (entre autres, l'installation selon l'invention permet la synchronisation des différents types de mesures), au même emplacement (la zone de couverture du dispositif de mesures géochimiques DMG peut couvrir la zone de couverture du dispositif de mesures électriques DME), de façon régulière (permettant un suivi en continu d'un site), et de façon automatisée (évitant ainsi les erreurs humaines). De plus, l'installation selon l'invention permettant de fournir au spécialiste différents types d'informations (électrique, géochimique et météorologique), ce dernier peut être à même, après analyse croisée desdites informations, de discerner si des anomalies de mesure détectées par un ou plusieurs desdits dispositifs sont relatives à une fuite du gaz injecté ou non.

### Description du dispositif de mesures géochimiques

Selon la présente invention, les sondes de prélèvement de gaz SPG sont installées au-dessus de la zone vadose (de façon à ce que les prélèvements soient sous la forme de gaz libre et non pas sous la forme de gaz dissous) et en-dessous de la zone de production de gaz biogénique (de façon à ce que les mesures de gaz ne soient pas polluées par la production naturelle de gaz, liée à la dégradation de la matière organique en proche surface). Dans le cas où le gaz injecté dans le site de stockage géologique est le CO₂, cela permet notamment que les prélèvements de gaz soient réalisés en-dessous de la zone de production biogénique de CO₂. En effet, l'activité biologique bactérienne et végétale qui se développe en proche surface du sous-sol est un système émissif de CO₂. En se plaçant en dessous de la zone de production biogénique de CO₂, les mesures réalisées par les sondes de prélèvement de gaz SPG sont moins affectées par l'émission naturelle de CO₂ et sont donc plus fiables.

Selon un mode de réalisation de la présente invention, les moyens de transferts de gaz MTG dudit dispositif de mesures géochimiques DMG comportent une électrovanne à trois voies, une première voie étant reliée à une desdites sondes de prélèvement de gaz SPG, une deuxième voie conduisant à un système de purge de l'ensemble du dispositif de mesures géochimiques de gaz DMG, et une troisième voie étant reliée à une pompe. L'utilisation d'une électrovanne permet que les flux de gaz prélevés par les sondes SPG soient pilotés par l'automate AUT. La pompe permet quant à elle d'aspirer le gaz prélevé et de le distribuer vers l'analyseur de gaz AG. Le système de purge consiste par exemple à laisser échapper, dans un système annexe et pendant quelques minutes, le gaz présent au sein des moyens de transferts de gaz MTG. Selon un autre mode de réalisation de la présente invention, le système de purge consiste à injecter (sous pression) un gaz neutre dans l'ensemble du dispositif de mesures géochimiques DMG. Selon un mode de réalisation de la présente invention, le gaz neutre est de l'air atmosphérique. Selon un autre mode de réalisation de la présente invention, le gaz neutre est de l'azote. De façon générale, le système de purge permet de faire en sorte que la mesure suivante ne soit pas affectée par des résidus de gaz de la mesure précédente.

Selon un autre mode de réalisation de la présente invention, les moyens de transferts de gaz MTG dudit dispositif de mesures géochimiques DMG comportent une électrovanne à deux voies, une première voie étant reliée à une desdites sondes de prélèvement de gaz SPG, une deuxième voie étant reliée à une pompe permettant la distribution du gaz prélevé à l'analyseur de gaz AG.

Selon un mode de réalisation de la présente invention, une vanne de restriction de débit est placée entre la pompe d'un des moyens de transfert et l'analyseur de gaz. La vanne de restriction de débit permet de garantir un débit faible et constant de gaz à l'entrée de l'analyseur de gaz AG.

Selon un mode de réalisation de la présente invention, l'analyseur de gaz comporte au moins un détecteur (permettant la détection et la quantification) du gaz stocké dans le site de stockage géologique et au moins un détecteur (permettant la détection et la quantification) d'un gaz rare.

Selon un mode de réalisation de la présente invention, le détecteur de gaz rare est un détecteur de Radon, d'Hélium, de Néon, d'Argon, de Krypton, ou de Xénon.

Selon un exemple particulier de mise en oeuvre de l'invention, le nombre de sondes de prélèvement de gaz SPG est compris entre 20 et 40. Avantageusement, les sondes de prélèvement de gaz SPG sont équi-réparties de façon à couvrir une surface de l'ordre de 1000 m². Les sondes de prélèvement de gaz SPG peuvent être également réparties selon des résultats de modélisations prévisionnelles de l'évolution du panache de gaz. Ainsi, en multipliant le nombre de sondes de prélèvements SPG et en les répartissant sur une surface importante du site de stockage géologique de CO₂, la surveillance du site est améliorée.

### Description du dispositif de mesures électriques

Selon l'invention, le dispositif de mesures électriques DME permet d'estimer la résistivité du sous-sol. La résistivité électrique du sous-sol dépend essentiellement de la teneur en eau de la roche (fonction de la porosité et de la saturation), de la salinité de l'eau interstitielle (et donc de la quantité de gaz dissous dans cette eau interstitielle) et de la teneur en argile des roches. Le principe de la méthode repose sur la mesure de différences de potentiel électrique associées à l'injection d'un courant électrique continu. Via la loi d'Ohm, la résistivité électrique dite apparente, fonction des caractéristiques géométriques du dispositif électrique DME, peut être calculée. Cette valeur résulte de la contribution de toutes les portions du milieu qui sont traversées par le courant émis en surface. Ainsi, la mesure représente une valeur qui intègre les résistivités sur un certain volume du sous-sol. La technique d'acquisition consiste à réaliser des mesures (le long de plusieurs profils d'acquisition 1D, ou selon des dispositifs d'acquisition 2D) en augmentant régulièrement l'espace entre les électrodes. Les mesures de terrain permettent ainsi d'obtenir une image (2D ou 3D, où l'une des dimensions est la profondeur) de la résistivité électrique apparente du sous-sol. A partir d'un logiciel d'inversion de données (on parle alors de tomographie de résistivité), par exemple basé sur la méthode des moindres carrés, on peut accéder à une image (2D ou 3D, où l'une des dimensions est la profondeur) de la résistivité électrique vraie du sous-sol. Classiquement, la profondeur d'investigation des méthodes électriques est de l'ordre de la dizaine à la centaine de mètres suivant les paramètres des dispositifs de mesures électriques mis en oeuvre (longueurs des profils, intensité électrique injectée, etc).

Selon l'invention, le dispositif de mesures électriques DME permet en outre d'estimer la chargeabilité du sous-sol. Pour ce faire, on injecte un courant électrique continu dans le sous-sol via le résistivimètre RES, et on mesure la décroissance, via le résistivimètre RES, de l'évolution de la tension dans le sous-sol au cours du temps, une fois l'injection de courant arrêtée. De la même manière que pour la résistivité électrique, un processus d'inversion est nécessaire afin d'obtenir une image 2D ou 3D de la chargeabilité du milieu.

Selon un mode de réalisation de la présente invention, lesdites électrodes ELEC sont connectées au résistivimètre RES par l'intermédiaire d'un multiplexeur. Le multiplexeur permet de référencer chacune des électrodes et de sélectionner, parmi l'ensemble des électrodes déployées, les électrodes requises pour une mesure donnée. Le multiplexeur permet également de communiquer au résistivimètre une séquence de mesures à réaliser.

Selon un mode de réalisation de la présente invention, le résistivimètre utilisé est le modèle TERRAMETER SAS4000 commercialisé par la société ABEM.

Selon l'invention, on peut choisir une configuration d'acquisition du dispositif électrique DME adaptée à un objectif donné. Par configuration d'acquisition choisie selon la présente invention, on entend le nombre d'électrodes ELEC requises pour une mesure donnée, le nombre d'électrodes ELEC déployées, l'espacement entre les électrodes ELEC, et leur agencement spatial. Selon un mode de réalisation de la présente invention, les électrodes ELEC déployées pour une mesure sont disposées en ligne droite (on parle alors de profil d'acquisition 1D), à la surface du sol (on parle alors de profil d'acquisition 2D) ou le long d'au moins deux puits de forages (et on parle d'acquisition de puits). Par ailleurs, le spécialiste privilégiera une configuration de type quadripole (deux électrodes d'émission et deux électrodes de réception, dite de Wenner-Schlumberger) dans le cas d'un profil d'acquisition 1D, dipôle-dipôle et pôle-pôle (avec 2 électrodes à l'infini) dans le cas de profils d'acquisition 2D. Le nombre d'électrodes ELEC déployées ainsi que l'espacement entre ces électrodes sont déterminés par le spécialiste en fonction de la profondeur de pénétration souhaitée, de la résolution attendue et du bruit de fond électrique ambiant. Ainsi, si on appelle D l'espacement entre les électrodes et N le nombre d'électrodes, alors la profondeur d'investigation d'un tel dispositif est d'environ (N-1)^{∗}D/5 (elle dépend également du dispositif utilisé et de la résistivité des terrains), et la résolution de l'image qui pourra être obtenue par tomographie de résistivité en surface vaut D.

Selon un mode de réalisation de la présente invention pour lequel les électrodes ELEC du dispositif de mesures électriques DME sont placées à la surface du sol, on obtient, à partir de ces mesures et après avoir effectué une tomographie de résistivité, une image de la résistivité sous la surface du sol et jusqu'à une profondeur qui est fonction de la configuration du dispositif de mesures électriques.

Selon un autre mode de réalisation de la présente invention pour lequel les électrodes ELEC du dispositif de mesures électriques DME sont réparties dans au moins deux puits, on peut obtenir, à partir de ces mesures et après avoir effectué une tomographie de résistivité, une image de la résistivité entre les puits dans lesquels sont placées les électrodes.

Selon un mode de réalisation de la présente invention, l'automate AUT déclenche une mesure électrique par le dispositif de mesures électriques DME toutes les 3 heures. De cette façon, il est possible de suivre l'évolution temporelle de la résistivité et/ou de la chargeabilité du sous-sol investigué.

Selon un exemple particulier de mise en oeuvre de l'invention, le nombre d'électrodes ELEC est de 64 et les électrodes sont espacées de 25cm.

### Description des éléments annexes

Selon un mode préféré de mise en oeuvre de la présente invention, le collecteur de données COLL correspond au modèle DT85GLM commercialisé par la société DIMELCO.

Selon un mode préféré de mise en oeuvre de la présente invention, l'installation comporte trois détecteurs de gaz : un détecteur de CO₂ (par exemple le détecteur LI-820 commercialisé par la société LI-COR), un détecteur de Radon (par exemple le préleveur d'aérosols EAS 70K commercialisé par la société ALGADE), et un détecteur de gaz rares (par exemple un spectromètre de masse). Préférentiellement, le détecteur de gaz rares permet la détection et la quantification de la quantité de Radon, d'Hélium, de Néon, d'Argon, de Krypton, ou de Xénon présents dans l'atmosphère.

Selon un mode de réalisation de la présente invention, les moyens de transmission des données MTD permettent la transmission des données collectées à des moyens in situ d'analyse des données collectées. Il peut ainsi s'agir d'une liaison filaire ou d'une liaison sans fil (bluetooth, wi-fi, etc), permettant par exemple une connexion in situ d'un ordinateur à l'installation et ainsi l'analyse des données collectées par un spécialiste.

Selon un mode de réalisation de la présente invention, les moyens de transmission des données MTD collectées sont des moyens de télétransmission (modem permettant une connexion internet par exemple). Préférentiellement, les moyens de transmission des données MTD collectées par le collecteur COLL sont assurés par un modem 3G.

Ainsi, l'installation selon l'invention permet que les données collectées sur le site soient transmises de façon automatique et en temps réel à un spécialiste, qui pourra ainsi être en mesure de prendre les décisions ad hoc en cas de détection de fuite de gaz.

Selon un mode de réalisation de la présente invention, le collecteur de données COLL permet la prise en compte de seuils déclencheurs d'alerte et est à même de déclencher une alerte. Ainsi, si une quantité de CO₂ supérieure à un certain seuil fixé par le spécialiste est détectée au niveau d'au moins une sonde de prélèvement, le collecteur de données est à même de lancer une alerte, par exemple à un spécialiste ou aux pouvoirs publics, via un message électronique, une alerte sonore etc.

Selon un mode de réalisation de la présente invention, une fois la quantification de gaz réalisée par le détecteur de gaz (DG), les informations résultantes sont traitées via un logiciel permettant de transformer la mesure (par exemple en mV) en valeur numérique, et sont ensuite enregistrées par le collecteur de données. Le logiciel peut être un simple logiciel tableur, ou bien être spécifique à l'analyseur de gaz.

Selon un mode de réalisation de la présente invention, l'alimentation électrique de ladite installation est assurée par un panneau solaire, et est connectée à une batterie.

Selon un autre mode de réalisation de la présente invention, l'automate AUT, l'analyseur de gaz AG, le collecteur de données et le résistivimètre sont protégés dans un abri étanche.

Selon un mode de réalisation de la présente invention, l'installation peut comporter un moyen de mesure de l'humidité du sol. De telles mesures peuvent en effet permettre de corriger les mesures électriques réalisées avec le dispositif de mesures électriques DME des effets engendrés par des variations du taux d'humidité dans le sol.

Ainsi, la présente invention décrit une installation fondée sur le couplage de plusieurs types de dispositif de mesures en une unique installation cohérente, pilotée par un automate, permettant une surveillance automatique, permanente et fiable de sites de stockage géologique de gaz.

### Utilisation de l'invention

L'invention concerne également l'utilisation de l'installation selon l'invention pour la surveillance d'un site de stockage géologique de gaz, tel que le dioxyde de carbone (CO₂) ou le méthane, afin de détecter d'éventuelles fuites de ce gaz.

Préférentiellement, l'utilisation de l'installation selon l'invention pour la surveillance d'un site de stockage géologique de gaz peut requérir de réaliser une étape d'étalonnage de l'installation préalablement à la phase de surveillance proprement dite. Alternativement, l'installation selon l'invention peut être utilisée pour la surveillance d'un site de stockage géologique dans lequel le gaz est déjà injecté.

### Etalonnage

Selon un mode de mise en oeuvre de la présente invention, l'étalonnage de l'installation selon l'invention est réalisé préalablement à l'injection du gaz dans le site de stockage géologique de gaz.

Selon un mode de mise en oeuvre de la présente invention, l'étalonnage de l'installation selon l'invention consiste à réaliser des mesures pendant une période prédéfinie via l'installation selon l'invention. Plus précisément on effectue des mesures pendant une période prédéfinie avec lesdits dispositifs électriques DME et géochimiques DMG préalablement à l'injection de gaz dans ledit site de stockage géologique, de sorte à établir
- Un niveau de référence pour les mesures géochimiques, reflétant l'activité géochimique naturelle du site (liée à la dégradation de la matière organique, aux changements climatiques au cours du temps, etc) ;
- Un niveau de référence pour les mesures électriques, reflétant les variations de propriétés électriques propres du site (liées aux changements climatiques essentiellement au cours du temps).
Préférentiellement, les mesures effectuées en vue de l'étalonnage de ladite installation sont réalisées sur une période comprise entre un an et trois ans.

Selon un mode de mise en oeuvre de la présente invention, on peut étalonner le dispositif électrique DME de l'installation selon l'invention via des expériences menées en laboratoire sur des échantillons de roche provenant du site de stockage géologique de gaz d'intérêt. Ainsi, selon un mode particulier de mise en oeuvre de la présente invention, après séchage de l'échantillon, celui-ci est saturé sous vide par une eau à 1 g/l en NaCI puis mis en place dans une cellule «Hassler» (par exemple du type Ergotech Mk4). Cet équipement permet à la fois de désaturer progressivement l'échantillon de roche par application d'une pression capillaire et de réaliser des mesures de la résistivité électrique entre 20 Hz et 2 MHz en utilisant un impédancemètre (par exemple du type Agilent E4980A). La désaturation peut être réalisée en utilisant deux gaz différents, dont le gaz à injecter est par exemple un gaz inerte tel que l'azote, afin de mettre en évidence l'influence du gaz à injecter sur les paramètres électriques (indice de résistivité, fréquence critique, potentiel spontané). Plus précisément, les valeurs de résistivité obtenues lors de ces expériences menées en laboratoire permettent de déterminer un seuil au-delà duquel un changement de résistivité mesuré par le dispositif de mesures électriques DME peut être interprété comme étant dû à la présence, au niveau du dispositif de mesures électriques DME, du gaz injecté.

Selon un mode de mise en oeuvre de la présente invention, l'étalonnage de l'installation selon l'invention comprend des mesures réalisées in situ par l'installation selon l'invention en simulant une ou plusieurs fuites de gaz. Ces simulations de fuites de gaz peuvent être réalisées en injectant du gaz dans un puits de forage, par exemple entre 3 et 5 m de profondeur. On peut par exemple simuler une fuite brutale (en injectant du gaz sous forte pression) ou encore une fuite diffuse. Les mesures réalisées par les dispositifs de mesures géochimiques DMG et électriques DME au cours de ces tests de fuite permettent d'une part de calibrer les mesures électriques par rapport aux mesures géochimiques, mais aussi, de définir des seuils de détection de fuite de gaz, par rapport aux niveaux de référence préalablement établis.

La calibration entre les mesures géochimiques et les mesures électriques consiste à déterminer la loi de corrélation entre les quantités de gaz mesurées par le dispositif de mesures géochimiques DMG et les variations de résistivité électrique mesurées par le dispositif de mesures électriques DME. Selon un mode de réalisation de la présente invention, on établit un abaque représentant en abscisse les quantités de gaz mesurées par le dispositif de mesures géochimiques DMG et en ordonnée les variations de résistivité électrique mesurées par le dispositif de mesures électriques DME. Puis, par exemple par régression linéaire, on détermine une loi expérimentale représentative de la corrélation entre ces deux types de mesure. La loi expérimentale ainsi définie entre ces deux groupes de données permet de réaliser un contrôle croisé des mesures des deux dispositifs. Ainsi, si l'un des dispositifs détecte une mesure anormale et si la mesure réalisée par l'autre dispositif est en deçà de la prédiction obtenue par la loi expérimentale, il est probable que la mesure anormale soit une anomalie ponctuelle, non liée à une fuite de gaz.

Selon un mode de réalisation de la présente invention, les seuils de détection de fuite de gaz ainsi définis sont fournis au collecteur de données afin de déclencher une alerte à distance en cas de fuite de gaz.

Selon un mode de réalisation de la présente invention, l'étape d'étalonnage de l'installation selon l'invention est poursuivie lors de la phase d'injection et lors des premières années après l'injection de gaz.

### Surveillance

Au cours de l'étape de surveillance d'un site de stockage géologique de gaz via l'installation selon l'invention, il convient de surveiller l'évolution des mesures réalisées par l'installation selon l'invention. L'installation selon l'invention permet un suivi temporel des caractéristiques électriques, géochimiques et environnementales d'un site de stockage géologique de gaz.

Selon un mode de réalisation de la présente invention, l'étape de surveillance d'un site de stockage géologique de gaz par l'installation selon l'invention est mise en oeuvre en utilisant l'installation selon l'invention de sorte à réaliser des mesures automatiques, régulières et à distance.

A partir notamment des mesures réalisées par le dispositif de mesures électriques DME de l'installation selon l'invention, le spécialiste peut déterminer, par tomographie de résistivité, une imagerie (en 2D, ou 3D suivant la configuration d'acquisition) de la diffusion du gaz injecté dans le sous-sol. De plus, les mesures pouvant être répétées dans le temps, le spécialiste peut obtenir l'évolution temporelle de cette résistivité. Les changements de résistivité observés au cours du temps peuvent être un indicateur de mouvements du gaz injecté. Lorsque ces changements de résistivité mesurés par le dispositif de mesures électriques DME sont corrélés avec des changements de concentration en gaz mesurés par le dispositif de mesures géochimiques DMG, alors la probabilité d'une fuite de gaz est importante. Une alerte peut alors être lancée par le spécialiste. Lorsque des changements de résistivité mesurés par le dispositif de mesures électriques DME ne sont pas corrélés avec un changement de concentration en gaz mesuré par le dispositif de mesures géochimiques DMG, et que les changements de résistivité sont observés à la profondeur d'investigation du dispositif de mesures géochimiques DMG, alors le spécialiste peut par exemple en conclure qu'il s'agit d'une anomalie de mesure ponctuelle. Lorsque des changements de résistivité mesurés par le dispositif de mesures électriques DME ne sont pas corrélés avec un changement de concentration en gaz mesuré par le dispositif de mesures géochimiques DMG, et que les changements de résistivité sont observés à une profondeur d'investigation supérieure à celle du dispositif de mesures géochimiques DMG, alors le spécialiste peut estimer qu'une fuite de gaz est prochaine ou imminente, et est en mesure éventuellement d'alerter qui de droit.

Ainsi, la présente invention permet notamment de combiner, en une installation unique, cohérente et intégrée, l'information obtenue par un dispositif de mesures géochimiques DMG avec l'information obtenue par un dispositif de mesures électriques DME et donc de réaliser une surveillance fiabilisée d'un site de stockage géologique de gaz. En effet, cette information croisée permet une meilleure détection des fuites de gaz pouvant survenir à la suite d'une injection de gaz dans un site de stockage géologique de gaz, voire d'anticiper ces fuites grâce aux profondeurs d'investigation différentes des deux types de mesures. De plus, l'installation selon l'invention peut être entièrement automatisée et pilotée à distance, ce qui permet une surveillance permanente d'un site de stockage géologique de gaz.

### Exemple d'application

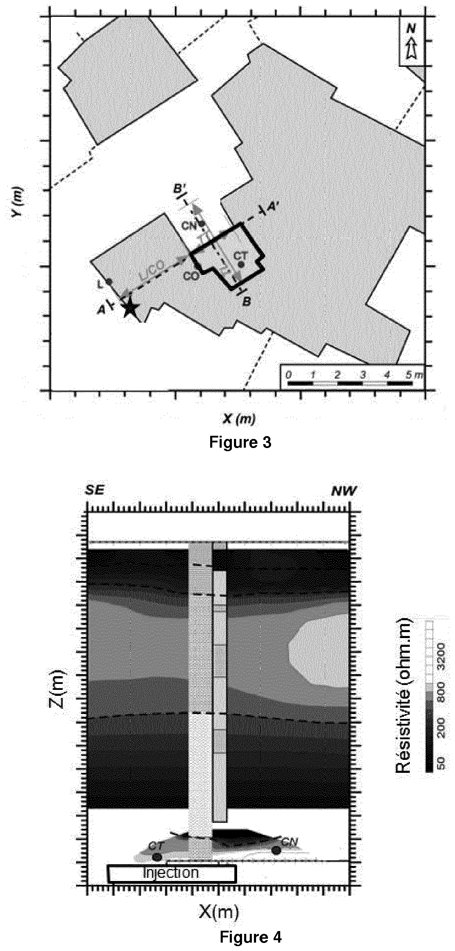

Les Figures 3 à 6 illustrent un exemple d'application de l'installation selon l'invention pour la surveillance d'un site de stockage géologique de CO₂. Le site en question est une carrière de calcaire. Du CO₂ a été injecté dans une cavité à l'intérieur de cette carrière.

La Figure 3 présente un plan surfacique de la zone d'injection. Les zones grisées correspondent aux piliers calcaires de la carrière et la chambre d'injection correspond à la zone centrale encadrée en gras. Cette Figure présente la localisation de deux profils de mesures de résistivité électrique de surface (AA' et BB'), ainsi que trois profils de mesures de résistivité électrique dans la cavité (TL, TT et L-CO), la localisation de détecteurs de CO₂ (CN, CO, CT, L), et la localisation de la station météorologique placée à la surface (représentée par une étoile).

La Figure 4 présente un résultat de tomographie de résistivité électrique réalisée le long du profil BB' avant l'injection de CO₂, auquel un résultat de tomographie de résistivité réalisé le long du profil TL (au toit de la cavité) a été superposé, ainsi que la localisation des détecteurs CT et CN de CO₂. La ligne pointillée représente la limite entre les argiles et le calcaire. Ces cartes de variations de résistivité dans le sous-sol du site de stockage géologique de CO₂ choisi constituent la référence par rapport à laquelle vont être analysées les cartes de variations de résistivité qui seront réalisées pendant et après l'injection de CO₂.

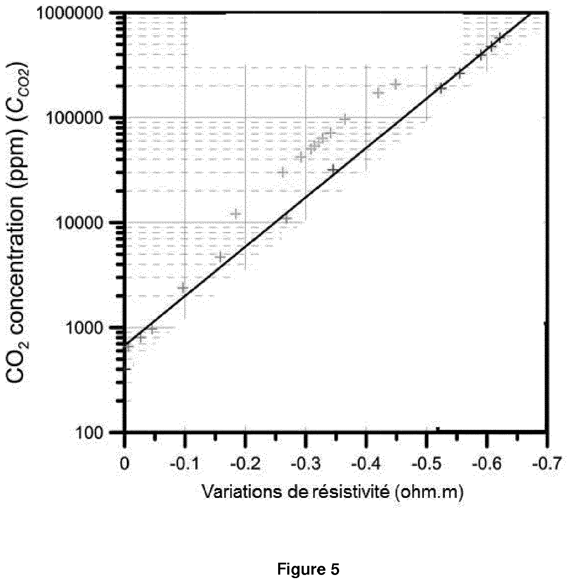

La Figure 5 représente (via des signes « + ») les variations concentrations en CO₂ mesurées par les capteurs CN et CT de CO₂ en fonction des variations relatives de résistivité électrique mesurées le long de la coupe B-B', obtenues au cours du temps, lors d'une phase d'étalonnage réalisée avant et pendant l'injection. On peut observer que les mesures géochimiques et électriques sont très fortement corrélées entre elles. A partir de ce graphe, on peut alors obtenir une loi de corrélation entre ces deux types de mesures, par exemple par une régression linéaire.

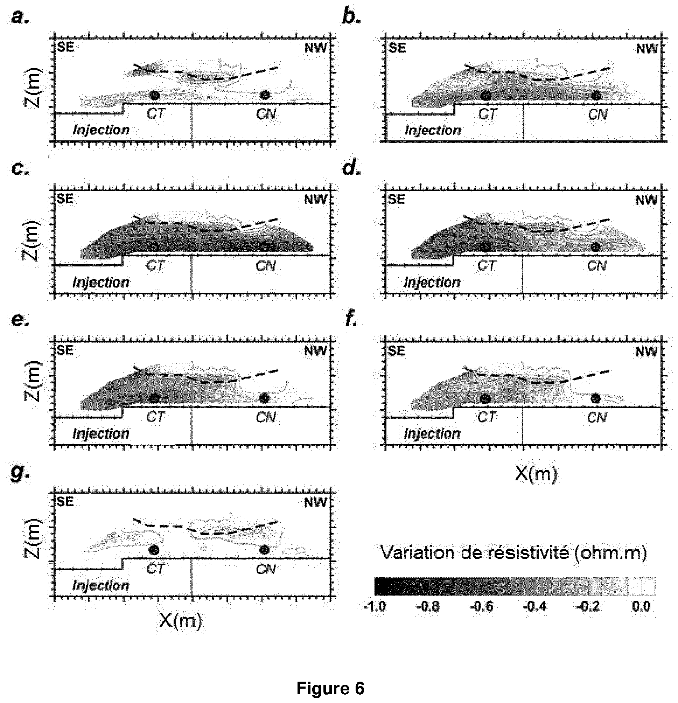

La Figure 6 présente l'évolution au cours du temps de la variation relative de résistivité électrique le long du profil TL (au toit de la cavité), après injection de CO₂ ((a) t=0.1 jour, (b) t=0.2 jour, (c) t=0.4 jour, (d) t=1 jour, (e) t=10 jours, (f) t= 40 jours et (g) t=100 jours après le début de l'injection). Ces cartes de variation de résistivité dans le sous-sol ont été obtenues à partir d'une tomographie de résistivité réalisée à chaque instant t, la référence des variations étant prises par rapport à la carte présentée en Figure 4. On peut observer sur cette Figure que les variations de résistivité sont maximales à t=0.4j.

Ainsi, la corrélation entre les mesures géochimiques et les mesures électriques observée en Figure 5 confirme l'intérêt d'une installation permettant un couplage cohérent, en une installation unique, entre un dispositif de mesures géochimiques DMG et un dispositif de mesures électriques DME. De plus, l'installation selon l'invention étant entièrement automatisée, la surveillance continue, pendant l'injection, comme montré en Figure 6, mais également après l'injection, est possible. Ainsi, l'installation selon l'invention peut permettre de détecter les signes précurseurs d'une fuite, en identifiant des anomalies dans les cartes de résistivité relatives telles que présentées en Figure 6, et/ou en détectant des concentrations anormales de gaz. Par le couplage des informations électriques et géochimiques, l'installation selon l'invention permet de contribuer à lever d'éventuelles ambiguïtés concernant l'interprétation à faire de mesures (géochimiques et ou électriques) anormales, mais aussi de contribuer à une localisation plus fiable de potentielles fuites de gaz.

## Revendications

1. Installation pour la surveillance d'un site de stockage géologique d'un gaz, tel que du CO₂ ou du méthane, **caractérisé en ce que** ladite installation comporte en combinaison au moins les éléments suivants :
- un dispositif de mesures géochimiques (DMG), comportant une pluralité de sondes de prélèvement de gaz (SPG), lesdites sondes étant reliées à un analyseur de gaz (AG) et lesdites sondes (SPG) étant placées dans les tous premiers mètres sous la surface du sol dudit site ;
- un dispositif de mesures électriques (DME), comportant une pluralité d'électrodes (ELEC), lesdites électrodes étant reliées à un résistivimètre (RES), ledit dispositif de mesures électriques (DME) étant destiné à des mesures électriques dans le sous-sol ;
- une station météorologique (SM) de surface permettant la mesure de paramètres environnementaux associés audit site,
lesdits dispositifs de mesures géochimiques (DMG) et électriques (DME) étant pilotés par un automate (AUT), ledit dispositif de mesures géochimiques (DMG), ledit dispositif de mesures électriques (DME) et la dite station météorologique (SM) étant reliés à un collecteur de données (COLL), ledit collecteur (COLL) étant lui-même relié à des moyens de transmission desdites données (MTD), et dans laquelle installation, lesdites sondes de prélèvement de gaz (SPG) sont installées au-dessus de la zone vadose et en-dessous de la zone de production de gaz biogénique.

2. Installation selon la revendication 1, dans laquelle lesdites sondes de prélèvements de gaz sont reliées à un analyseur de gaz (AG) via des moyens de transferts de gaz (MTG).

3. Installation selon la revendication 2, dans laquelle lesdits moyens de transferts de gaz (MTG) dudit dispositif de mesures géochimiques comportent une électrovanne à trois voies, une première voie étant reliée à une desdites sondes de prélèvement de gaz (SPG), une deuxième voie conduisant à un système de purge dudit dispositif de mesures géochimiques (DMG), et une troisième voie étant reliée à une pompe, ladite pompe étant destinée à aspirer ledit gaz prélevé par lesdites sondes de prélèvement (SPG) et permettant la distribution dudit gaz prélevé vers ledit analyseur de gaz (AG).

4. Installation selon l'une des revendications précédentes, dans laquelle ledit analyseur de gaz (AG) comporte au moins un détecteur dudit gaz stocké et au moins un détecteur de gaz rare.

5. Installation selon l'une des revendications précédentes, dans laquelle ledit résistivimètre (RES) dudit dispositif de mesures électriques (DME) envoie un courant électrique continu dans le sous-sol via deux desdites électrodes (ELEC) et enregistre une différence de potentiel électrique entre deux autres desdites électrodes (ELEC).

6. Installation selon l'une des revendications précédentes, dans laquelle l'automate (AUT) déclenche des mesures électriques via le dispositif de mesures électriques (DME) et des mesures géochimiques via le dispositif de mesures géochimiques (DMG) de façon régulière dans le temps.

7. Installation selon l'une des revendications précédentes, dans laquelle lesdites électrodes (ELEC) sont placées à la surface du sol, et/ou le long de parois d'une cavité souterraine, et/ou le long d'un puits.

8. Installation selon l'une des revendications précédentes, dans laquelle ladite station météorologique (SM) assure un contrôle continu d'au moins la température, la pression, la pluviométrie et l'hygrométrie.

9. Installation selon l'une des revendications précédentes, dans laquelle l'alimentation électrique de ladite installation est assurée par un panneau solaire, connectée à une batterie.

10. Installation selon l'une des revendications précédentes, dans laquelle lesdits moyens de transmission desdites données (MTD) sont assurés par un modem 3G.

11. Utilisation de l'installation selon l'une des revendications précédentes pour la surveillance d'un site de stockage géologique d'un gaz, tel que du CO₂ ou du méthane.

12. Utilisation selon la revendication 11, dans laquelle une étape d'étalonnage est réalisée préalablement à l'injection de gaz dans le site de stockage géologique d'un gaz.

## Patentansprüche

1. Anlage zur Überwachung einer geologischen Lagerstätte eines Gases, wie CO₂ oder Methan, **dadurch gekennzeichnet, dass** die Anlage in Kombination mindestens die folgenden Elemente umfasst:
- eine Vorrichtung für geochemische Messungen (DMG), umfassend eine Vielzahl von Gasentnahmesonden (SPG), wobei die Sonden mit einem Gasanalysator (AG) verbunden sind, und die Sonden (SPG) alle ersten Meter unter der Oberfläche des Bodens der Stätte platziert sind;
- eine Vorrichtung für elektrische Messungen (DME), umfassend eine Vielzahl von Elektroden (ELEC), wobei die Elektroden mit einem Widerstandsmesser (RES) verbunden sind, wobei die Vorrichtung für elektrische Messungen (DME) für elektrische Messungen im Untergrund bestimmt ist;
- eine meteorologische Station (SM) an der Oberfläche, welche eine Messung von Umgebungsparametern gestattet, die mit der Stätte assoziiert sind;
wobei die Vorrichtung für geochemische (DMG) und elektrische (DME) Messungen von einem Automaten (AUT) gesteuert werden, wobei die Vorrichtung für geochemische Messungen (DMG), die Vorrichtung für elektrische Messungen (DME) und die meteorologische Station (SM) mit einem Datensammler (COLL) verbunden sind, wobei der Sammler (COLL) selbst mit Mitteln zur Übertragung der Daten (MTD) verbunden ist, und wobei in der Anlage die Gasentnahmesonden (SPG) über der vadosen Zone und unter der Zone der Erzeugung von biogenem Gas installiert sind.

2. Anlage nach Anspruch 1, wobei die Gasentnahmesonden mit einem Gasanalysator (AG) über Gastransfermittel (MTG) verbunden sind.

3. Anlage nach Anspruch 2, wobei die Gastransfermittel (MTG) der Vorrichtung für geochemische Messungen ein Drei-Wege-Elektroventil umfassen, wobei ein erster Weg mit einer der Gasentnahmesonden (SPG) verbunden ist, ein zweiter Weg zu einem Spülsystem der Vorrichtung für geochemische Messungen (DMG) führt, und ein dritter Weg mit einer Pumpe verbunden ist, wobei die Pumpe dazu bestimmt ist, das Gas, das durch die Gasentnahmesonden (SPG) entnommen wird, anzusaugen, und die Verteilung des entnommenen Gases zu dem Gasanalysator (AG) gestattet.

4. Anlage nach einem der vorhergehenden Ansprüche, wobei der Gasanalysator (AG) mindestens einen Detektor des gelagerten Gases und mindestens einen Detektor von Edelgas umfasst.

5. Anlage nach einem der vorhergehenden Ansprüche, wobei der Widerstandsmesser (RES) der Vorrichtung für elektrische Messungen (DME) einen elektrischen Gleichstrom in den Untergrund über zwei der Elektroden (ELEC) schickt und eine elektrische Potentialdifferenz zwischen zwei anderen der Elektroden (ELEC) aufzeichnet.

6. Anlage nach einem der vorhergehenden Ansprüche, wobei der Automat (AUT) elektrische Messungen über die Vorrichtung für elektrische Messungen (DME) und geochemische Messungen über die Vorrichtung für geochemische Messungen (DMG) regelmäßig in der Zeit auslöst.

7. Anlage nach einem der vorhergehenden Ansprüche, wobei die Elektroden (ELEC) an der Oberfläche des Bodens und/oder entlang der Wände eines unterirdischen Hohlraums und/oder entlang eines Bohrlochs platziert sind.

8. Anlage nach einem der vorhergehenden Ansprüche, wobei die meteorologische Station (SM) eine kontinuierliche Kontrolle mindestens der Temperatur, des Drucks, der Niederschlagsmenge und der Hygrometrie sicherstellt.

9. Anlage nach einem der vorhergehenden Ansprüche, wobei die elektrische Versorgung der Anlage durch ein Solarpaneel sichergestellt wird, das mit einer Batterie verbunden ist.

10. Anlage nach einem der vorhergehenden Ansprüche, wobei die Mittel zur Übertragung der Daten (MTD) durch ein 3G-Modem gebildet werden.

11. Verwendung einer Anlage nach einem der vorhergehenden Ansprüche zur Überwachung einer geologischen Lagerstätte eines Gases, wie CO₂ oder Methan.

12. Verwendung nach Anspruch 11, wobei ein Kalibrierschritt vor der Injektion von Gas in der geologischen Lagerstätte eines Gases durchgeführt wird.

## Claims

1. A facility for monitoring a geological storage site for a gas such as CO₂ or methane, **characterized in that** said facility comprises at least the following elements in combination:
- a geochemical measurement device (DMG), comprising a plurality of gas sampling probes (SPG), said probes being connected to a gas analyzer (AG) and said probes (SPG) being arranged in the first few meters below the surface of the ground of said site,
- an electrical measurement device (DME), comprising a plurality of electrodes (ELEC), said electrodes being connected to a resistivity meter (RES), said electrical measurement device (DME) being intended for electrical measurements in the subsoil,
- a surface weather station (SM) enabling measurement of environmental parameters associated with said site,
said geochemical (DMG) and electrical (DME) devices being controlled by an automaton (AUT), said geochemical measurement device (DMG), said electrical measurement device (DME) and said weather station (SM) being connected to a data collector (COLL), said collector (COLL) being itself connected to means of transmitting said data (MTD), and in which facility said gas sampling probes (SPG) are installed above the vadose zone and below the biogenic gas production zone.

2. A facility as claimed in claim 1, wherein said gas sampling probes are connected to a gas analyzer (AG) via gas transfer means (MTG).

3. A facility as claimed in claim 2, wherein said gas transfer means (MTG) of said geochemical measurement device comprise a three-way solenoid valve, a first way being connected to one of said gas sampling probes (SPG), a second way leading to a purge system for said geochemical measurement device (DMG), and a third way being connected to a pump, said pump being intended to suck said gas sampled by said sampling probes (SPG) and enabling delivery of said sampled gas to said gas analyzer (AG).

4. A facility as claimed in any one of the previous claims, wherein said gas analyzer (AG) comprises at least one detector for said stored gas and at least one noble gas detector.

5. A facility as claimed in any one of the previous claims, wherein said resistivity meter (RES) of said electrical measurement device (DME) sends a direct electric current into the subsoil via two of said electrodes (ELEC) and records an electric potential difference between two others of said electrodes (ELEC).

6. A facility as claimed in any one of the previous claims, wherein automaton (AUT) triggers electrical measurements via electrical measurement device (DME) and geochemical measurements via geochemical measurement device (DMG) regularly over time.

7. A facility as claimed in any one of the previous claims, wherein said electrodes (ELEC) are arranged on the ground surface, and/or along walls of an underground cavity, and/or along a well.

8. A facility as claimed in any one of the previous claims, wherein said weather station (SM) provides continuous control of at least temperature, pressure, rainfall and humidity.

9. A facility as claimed in any one of the previous claims, wherein the electric power supply of said facility is provided by a solar panel connected to a battery.

10. A facility as claimed in any one of the previous claims, wherein said means of transmitting said data (MTD) are provided by a 3G modem.

11. Use of the facility as claimed in any one of the previous claims for monitoring a geological storage site for a gas such as CO₂ or methane.

12. Use as claimed in claim 11, wherein a calibration step is carried out prior to injecting gas into the geological gas storage site.
